# EUROPEAN PATENT SPECIFICATION

(11) **EP 1 566 260 B1**
(45) Date of publication and mention of the grant of the patent: **29.10.2008**
(21) Application number: 05101016.3
(22) Date of filing: 11.02.2005
(51) Int. Cl.: B29C 70/88, B32B 15/08

(54) **Method for production of a bodywork panel for a motor vehicle, and strengthening element for implementation of this method**
Verfahren zur Herstellung einer Karosserieplatte für ein Kraftfahrzeug und ein Verstärkungselement zum Durchführen dieses Verfahrens
Procédé pour la fabrication d'une tôle d'automobile et élément de renforcement pour sa mise en oeuvre

(30) Priority: 12.02.2004 IT TO20040075
(43) Date of publication of application: 24.08.2005
(73) Proprietor: FIAT AUTO S.p.A., 10135 Torino (IT)
(72) Inventor: Zeccardo, Samuele, 10043 Collegno (IT)
(74) Representative: Jorio, Paolo

(56) References cited:
- US-A- 4 374 890
- US-A- 5 151 318

## Description

The present invention relates to a method for production of a bodywork panel for a motor vehicle, and in particular for production of a reinforced panel, such as a door, for example.

In order to obtain armoured motor vehicles, it is known to use vehicles from normal production, to remove the bodywork panels of these motor vehicles, and to modify their structure by replacing some components, for example the windows, and by adding strengthening elements and/or screen elements, in order to obtain the required characteristics of strength and anti-projectile resistance.

The need exists to armour the bodywork of the motor vehicles, in particular the mobile panels such as the doors and bonnet, at least partly during the manufacturing stages, without needing to dismantle the bodywork panels completely when the production of the motor vehicle has been completed.

US4374890 describes an adhesive-sheet for the reinforcement of metal plate, and a method of reinforcing metal plates using an adhesive-sheet in accordance with the preambles of claims 1 and 8 respectively. The adhesive-sheet comprises a first epoxy resin composition layer and a second epoxy resin composition layer laminated thereon wherein the first epoxy resin composition layer, when cured by heating, has a modulus of elasticity in tension sufficient to increase the stiffness of the metal plate.

The heat-curing may be performed simultaneously at the paint-baking step of body steel plates in the car-production line.

US5151318 discloses self-adhesive reinforcing material comprising a UV-transparent plastic film and a woven fabric impregnated with a partially acrylate-modified epoxy resin. The woven fabric is applied to the film and, on the side facing away from the film, is coated with a layer of an epoxy resin which again is partially acrylate-modified. The resins are converted by UV irradiation to a gelled state, which can be further cured by heat, and contain a heat-activatable hardener component.

The object of the present invention is to provide a method for production of a bodywork panel for a motor vehicle, which makes it possible to achieve the above-described requirement simply and economically.

According to the present invention, a method is provided for production of a bodywork panel for a motor vehicle, as defined in claim 1 and a strengthening element as defined in claim 8.

The invention will now be described with reference to the attached drawings, which illustrate a non-limiting embodiment of it, in which:
- Figure 1 is a partial, schematic cross-section of a bodywork panel of a motor vehicle produced according to a preferred embodiment of the method according to the present invention; and
- Figure 2 illustrates schematically a succession of stages of the method according to the present invention.

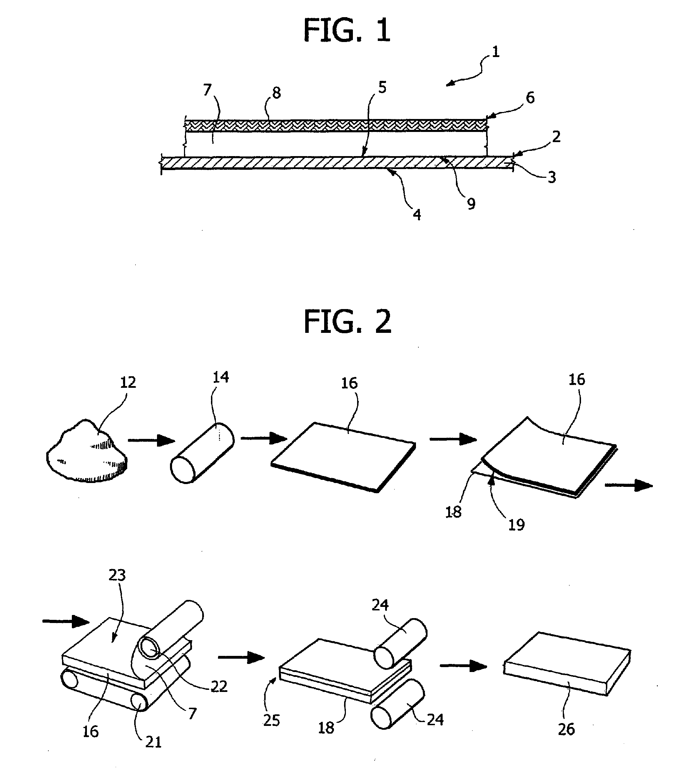

In figure 1, 1 indicates as a whole an armoured bodywork panel (illustrated partially and schematically), such as a door, or a lid of a boot or bonnet, comprising a metal structure 2, of which only one outer covering sheet 3 is shown, defined by a profiled metal sheet. The sheet 3 has two surfaces 4,5 opposite one another, of which the surface 4 defines part of the outer surface of the bodywork of the motor vehicle, whereas the surface 5 faces the interior of the panel 1 and supports an inner armouring element 6, comprising a layer 7 of polymerised resin and a layer 8, or fabric, made of strengthening fibres superimposed on one another. The layer 7 has a surface 9 which is secured to the surface 5, whereas the layer 8 comprises Kevlar fibres or carbon fibres or glass fibres, which are preferably interwoven with one another and are impregnated with the same resin as the layer 7.

With reference to figure 2, the element 6 is produced by mixing a mass 12 of thermosetting resin to be polymerised, which is then extruded in order to obtain substantially cylindrical pieces 14 with a diameter of approximately 100 mm and a length of approximately 1000 mm. Subsequently, the resin of the pieces 14 is kneaded again at a temperature of approximately 50°C and extruded once more at a temperature of approximately 40-50°C in order to obtain a succession of layers 16 of resin to be polymerised, cut to the required length.

Each layer 16 is deposited on a corresponding protective film 18 of silicone coated paper, in order to cover a self-adhesive surface 19 of the layer 16 itself, and is then drawn by a conveyor unit 21, for example of the roller or belt type. During the feeding carried out by the unit 21, the layer 8 is progressively unwound from a corresponding winding roller 22 and is deposited by gravity on the layer 16, on a surface 23 opposite the surface 19.

According to the method, in the stage of mixing of the mass 12, magnetic ferrite is added in order to provide the surface 19 with magnetic properties, as well as self-adhesive properties.

Again with reference to figure 2, the series of layers 8 and 16 defines a strengthening element 25, which is provisionally covered by the film 18 on the surface 19 and is compressed between rollers 24 in order to ensure that the components are secured and to obtain a substantially constant thickness, before being wrapped in packaging 26.

The element 25 is then used during production of the panel 1, after forming of the sheet 3. In fact, during the operations of sheet metal working of the bodywork, after the element 25 has been removed from the corresponding packaging 26, and after the film 18 has been removed manually from the surface 19, the surface 19 itself is applied manually to the surface 5 in a manner which is not illustrated, thus easily adapting the shape of the element 25 to the three-dimensional profile of the sheet 3.

The panel 1, on its own or in association with the other panels of the bodywork, is subjected to a stage of degreasing and phosphating, at a temperature of approximately 30-40°C, and then to a painting cycle in order to paint the surface 4.

The painting cycle comprises a first firing stage, known as "cataphoresis", at a temperature of approximately 160°C for a time of approximately 30 minutes, followed by cooling at ambient temperature for a period of approximately 30 minutes. During this first firing stage, the resin of the layer 16 is polymerised, and thus hardens in order to form the layer 7, whereas the surface 19 adheres perfectly to the surface 5.

Again during the painting, the panel 1 is then subjected to a second firing stage, known as the base firing, for a time of approximately 30 minutes at a temperature of approximately 140°C, and to subsequent cooling at ambient temperature for a period of approximately 30 minutes.

Finally, again in the painting cycle, the panel 1 is subjected to a third firing stage, known as the enamel firing, for a time of approximately 30 minutes at a temperature of approximately 130°C, and to subsequent cooling at ambient temperature for approximately 2 hours.

On completion of the painting cycle, any finishing coatings are applied onto the panel 1, and any windows and opening, control, and movement devices, etc. are fitted.

As an alternative to the foregoing description, the element 25 is applied to the sheet 3 after the first or after the second firing stages, in order to polymerise the resin in the second or, respectively, in the third firing stage.

From the foregoing description, it is apparent that the fact of applying the layer 8 directly during production of the panel 1 makes it possible to obtain strengthening, and in particular armouring of the panel 1 itself, without needing to dismantle the components of the motor vehicle completely after the motor vehicle itself has been finished.

In fact, because of the material of the fibres of which it is constituted, the layer 8 makes the element 6 very strong, which element thus has high strength such as to make the panel 1 armoured.

At the same time, the layer 8 limits considerably the occurrence of undesirable localised deformations, for example of bubble formation during the painting, during the successive stages of production of the bodywork, and during use of the motor vehicle.

It is also apparent that it is possible to adapt the shape of the element 25 to substantially any curvatures, since the resin of the layer 16 still remains to be polymerised and is thus easily deformed, as well as to attach the element 25 in an extremely simple manner to the sheet 3 or to other components, thus obtaining perfect adhesion after polymerisation.

The element 25 has a high damping and soundproofing capacity, and has a relatively low thickness and weight, for the same overall strength in comparison with the known solutions, because of the relatively low density of the layer 8.

Finally, it is apparent from the foregoing description that modifications and variations which do not depart from the field of protection of the present invention as defined in the claims, can be made to the method described.

In particular, the element 25 could be applied onto the interior of the panel 1, onto an element of the structure 2 other than the covering sheet 3, and/or onto plastics material, instead of onto sheet metal.

The magnetic ferrite or other magnetic attachment materials could be applied only superficially on the element 25, instead of being mixed with the resin of the layer 16, and/or the layers 16,7 and/or the film 18 could be superimposed in a manner other than that described.

Finally more than two superimposed layers could be provided in the elements 25, and therefore 6.

## Claims

1. Method for production of a bodywork panel (1) for a motor vehicle; the method comprising the steps of:
- forming a strengthening element (25) by superimposing on one another at least one layer of thermosetting resin to be polymerised (16) and at least one layer of strengthening fibres (8);
- forming a structure (2) which defines an outer surface (4) of said bodywork;
- joining said strengthening element (25) to an inner metal portion (5) of said structure (2);
- painting said outer surface (4); and
- polymerising said thermosetting resin after said strengthening element (25) has been joined to said structure (2), during a firing stage which constitutes part of the cycle of painting of said outer surface (4).
**characterised in that** the forming of said strengthening element (25) comprises the operation of combining magnetic material with said thermosetting resin in order to make it possible to attach said strengthening element (25) magnetically to the inner metal portion (5).

2. Method according to claim 1, **characterised in that** the combining of said magnetic material is carried out by mixing said magnetic material with said thermosetting resin.

3. Method according to claim 1 or 2, **characterised in that** said strengthening element (25) is joined by making a self-adhesive surface (19) of said layer of thermosetting resin to be polymerised (16) adhere to said inner portion (5).

4. Method according to claim 3, **characterised in that** the forming of said strengthening element (25) comprises the stage of applying a protective film (18) to said self-adhesive surface (19) and removing said film (18) before joining said strengthening element (25) to said inner portion (5).

5. Method according to any one of the preceding claims, **characterised in that** the forming of said strengthening element (25) comprises the operations of extruding a mass of resin (14) in order to obtain said layer of thermosetting resin to be polymerised (16) and subsequently superimposing said layer of strengthening fibres (7).

6. Method according to claim 5, **characterised in that** said layer of strengthening fibres (7) is superimposed by feeding said layer of thermosetting resin to be polymerised (16) and subsequently depositing said layer of strengthening fibres (7) progressively by gravity during the feeding.

7. Method according to claim 5 or claim 6, **characterised in that** the forming of said strengthening element (25) comprises an operation of compression of said layers of thermosetting resin to be polymerised (16) and of strengthening fibres (7).

8. Strengthening element (25) for implementation of the method according to any one of the preceding claims, comprising:
- at least one layer of thermosetting resin to be polymerised (16), and
- at least one layer of Kevlar fibres or carbon fibres or glass fibres, superimposed on said layer of thermosetting resin to be polymerised (16);
**characterised by** the thermosetting resin comprising magnetic material.

9. Strengthening element according to claim 8, **characterised in that** said magnetic material is embedded in said layer of thermosetting resin to be polymerised (16).

10. Strengthening element according to claim 8 or 9, **characterised by** also comprising a provisional film (18) applied to a self-adhesive surface (19) of said layer of thermosetting resin to be polymerised (16).

## Patentansprüche

1. Verfahren zum Herstellen einer Karosserieplatte (1) für ein Kraftfahrzeug; umfassend die Schritte:
- Bilden eines Verstärkungselements (25), indem zumindest eine Schicht (16) aus einem zu polymerisierenden duroplastischen Harz und zumindest eine Schicht aus Verstärkungsfasern (8) übereinandergelegt werden;
- Bilden einer Struktur (2), die eine äußere Oberfläche (4) der Karosserie festlegt;
- Verbinden des Verstärkungselements (25) mit einem inneren Metallabschnitt (5) der Struktur (2);
- Lackieren der äußeren Oberfläche (4); und
- Polymerisieren des duroplatischen Harzes, nachdem das Verstärkungselement (25) mit der Struktur (2) verbunden worden ist, im Verlauf einer Kataphorese, die einen Teil des Lackierzyklus der äußeren Oberfläche bildet;
**dadurch gekennzeichnet, dass** das Bilden des Verstärkungselements (25) das Zufügen von magnetischem Material zu dem duroplastischen Harz aufweist, um ein magnetisches Anbringen des Verstärkungselements (25) an den inneren Metallabschnitt (5) zu ermöglichen.

2. Verfahren nach Anspruch 1, **dadurch gekennzeichnet, dass** das Zufügen des magnetischen Materials durchgeführt wird, indem das magnetische Material mit dem duroplastischen Harz vermischt wird.

3. Verfahren nach Anspruch 1 oder 2, **dadurch gekennzeichnet, dass** das Verstärkungselement (25) verbunden wird, indem eine selbsthaftende Oberfläche (19) der Schicht (16) aus zu polymerisierenden duroplastischem Harz an den inneren Abschnitt (5) angehaftet wird.

4. Verfahren nach Anspruch 3, **dadurch gekennzeichnet, dass** das Bilden des Verstärkungselements (25) das Ausbringen eines Schutzfilms (18) an die selbsthaftende Oberfläche (19) und das Entfernen des Films (18) vor dem Verbinden des Verstärkungselements (15) mit dem inneren Abschnitt (5) aufweist.

5. Verfahren nach einem der vorhergehenden Ansprüche, **dadurch gekennzeichnet, dass** das Bilden des Verstärkungselements (25) das Extrudieren einer Harzmasse (14), um die Schicht (16) aus zu polymerisierenden duroplastischem Harz zu erhalten, und anschließend das Aufbringen der Schicht aus Verstärkungsfasern (7) aufweist.

6. Verfahren nach Anspruch 5, **dadurch gekennzeichnet, dass** die Schicht aus Verstärkungsfasern (7) aufgebracht wird, indem die Schicht (16) aus zu polymerisierenden duroplastischen Harz zugeführt und anschließend die Schicht aus Verstärkungsfasern (7) progressiv während des Zuführens durch die Schwerkraft abgelegt wird.

7. Verfahren nach Anspruch 5 oder 6, **dadurch gekennzeichnet, dass** das Bilden des Verstärkungselements (25) das Komprimieren der Schicht (16) aus zu polymerisierenden duroplastischem Harz und der Schicht (7) aus Verstärkungsfasern aufweist.

8. Verstärkungselement (25) zum Umsetzen des Verfahrens nach einem der vorhergehenden Ansprüche, umfassend;
- zumindest eine Schicht (16) aus zu polymerisierenden duroplastischem Harz, und
- zumindest eine Schicht aus Keflarfasern oder Kohlenstofffasern oder Glasfasern, die auf die Schicht (16) aus zu polymerisierenden duroplastischem Harz gelegt wird;
**dadurch gekennzeichnet, dass** das duroplastische Harz magnetisches Material aufweist.

9. Verstärkungselement nach Anspruch 8, **dadurch gekennzeichnet, dass** das magnetische Material in der Schicht (16) aus zu polymerisierenden duroplastischem Harz eingebettet ist.

10. Verstärkungselement nach Anspruch 8 oder 9, **dadurch gekennzeichnet, dass** es ebenso einen vorläufigen Film (18) aufweist, der auf eine selbsthaftende Oberfläche (19) der Schicht (16) aus zu polymerisierenden duroplastischem Harz aufgebracht ist.

## Revendications

1. Procédé de production d'un panneau de carrosserie (1) pour véhicule à moteur ; le procédé comprenant les étapes suivantes :
- la formation d'un élément de renforcement (25) en superposant l'une sur l'autre au moins une couche de résine thermodurcissable à polymériser (16) et au moins une couche de fibres de renforcement (8) ;
- la formation d'une structure (2) qui définit une surface externe (4) de ladite carrosserie ;
- l'assemblage dudit élément de renforcement (25) à une partie métallique interne (5) de ladite structure (2) ;
- la peinture de ladite surface externe (4) ; et
- la polymérisation de ladite résine thermodurcissable après que ledit élément de renforcement (25) a été assemblé à ladite structure (2), pendant une première étape de cuisson qui constitue une partie du cycle de peinture de ladite surface externe (4),
**caractérisé en ce que** la formation dudit élément de renforcement (25) comprend l'opération de combinaison d'un matériau magnétique avec ladite résine thermodurcissable pour rendre possible la fixation magnétique dudit élément de renforcement (25) sur la partie métallique interne (5).

2. Procédé selon la revendication 1, **caractérisé en ce que** la combinaison dudit matériau magnétique est effectuée en mélangeant ledit matériau magnétique avec ladite résine thermodurcissable.

3. Procédé selon la revendication 1 ou 2, **caractérisé en ce que** ledit élément de renforcement (25) est assemblé en faisant adhérer une surface auto-adhésive (19) de ladite couche de résine thermodurcissable à polymériser (16) à ladite partie interne (5).

4. Procédé selon la revendication 3, **caractérisé en ce que** la formation dudit élément de renforcement (25) comprend l'étape d'application d'un film protecteur (18) sur ladite surface auto-adhésive (19) et le retrait dudit film (18) avant assemblage dudit élément de renforcement (25) à ladite partie interne (5).

5. Procédé selon l'une quelconque des revendications précédentes, **caractérisé en ce que** la formation dudit élément de renforcement (25) comprend les opérations d'extrusion d'une masse de résine (14) pour obtenir ladite couche de résine thermodurcissable à polymériser (16) et ensuite la superposition de ladite couche de fibres de renforcement (7).

6. Procédé selon la revendication 5, **caractérisé en ce que** ladite couche de fibres de renforcement (7) est superposée en acheminant ladite couche de résine thermodurcissable à polymériser (16) et en déposant ensuite ladite couche de fibres de renforcement (7) de manière progressive par gravité pendant l'alimentation.

7. Procédé selon la revendication 5 ou la revendication 6, **caractérisé en ce que** la formation dudit élément de renforcement (25) comprend une opération de compression desdites couches de résine thermodurcissable à polymériser (16) et de fibres de renforcement (7).

8. Elément de renforcement (25) pour la mise en oeuvre du procédé selon l'une quelconque des revendications précédentes, comprenant :
- au moins une couche de résine thermodurcissable à polymériser (16), et
- au moins une couche de fibres de Kevlar ou de fibres de carbone ou de fibres de verre, superposée à ladite couche de résine thermodurcissable à polymériser (16) ;
**caractérisé en ce que** la résine thermodurcissable comprend un matériau magnétique.

9. Elément de renforcement selon la revendication 8, **caractérisé en ce que** ledit matériau magnétique est noyé dans ladite couche de résine thermodurcissable à polymériser (16).

10. Elément de renforcement selon la revendication 8 ou 9, **caractérisé en ce qu'**il comprend également un film provisoire (18) appliqué sur une surface auto-adhésive (19) de ladite couche de résine thermodurcissable à polymériser (16).
